# EUROPÄISCHE PATENTANMELDUNG

(11) **EP 2 366 955 A2**
(43) Veröffentlichungstag der Anmeldung: **21.09.2011**
(21) Anmeldenummer: 11001845.4
(22) Anmeldetag: 05.03.2011
(51) Int. Cl.: F24D 17/00

(54) **Brauchwasservorwärmeinrichtung für einen Durchlauferhitzer**

(30) Priorität: 15.03.2010 AT 4132010
(71) Anmelder: Vaillant GmbH, 42859 Remscheid (DE)
(72) Erfinder: Luka, Jürgen, 58453 Witten (DE)
(74) Vertreter: Hocker, Thomas

(57) **Zusammenfassung**

Brauchwasservorwärmeinrichtung für einen Durchlauferhitzer (1), vorzugsweise elektrischen Durchlauferhitzer (1), mit einer Frischwasserzulaufleitung (2) und einer Warmbrauchwasserleitung (3), wobei in der Frischwasserzulaufleitung (2) stromauf des Durchlauferhitzers (1) ein Wärmetauscher (4), der mit einem Heizungskreislauf (5) verbunden ist, angeordnet ist.

## Beschreibung

Die Erfindung bezieht sich auf eine Brauchwasservorwärmeinrichtung für einen Durchlauferhitzer.

In vielen Wohneinheiten geschieht die Brauchwassererwärmung unabhängig von der Heizungsanlage für die Raumwärme. Hierbei werden häufig elektrische Durchlauferhitzer eingesetzt, bei denen kaltes Brauchwasser elektrisch auf die entsprechende Temperatur aufgeheizt wird. Der Vorteil derartiger Anlagen besteht in dem einfachen Installationsaufbau, nachteilig sind die hohen Energiekosten, die notwendig sind, um das Brauchwasser mittels elektrischer Energie auf Solltemperatur aufzuheizen.

Ziel der Erfindung ist es daher, zumindest temporär den elektrischen Energieverbrauch des Durchlauferhitzers nennenswert zu senken.

Dies wird durch die Merkmale des unabhängigen Anspruchs 1 dadurch erreicht, dass das Frischwasser, welches einem elektrischen Durchlauferhitzer zugeführt wird, zunächst in einem Wärmetauscher, der mit einem Heizungskreislauf verbunden ist, vorgewärmt wird. Hierdurch lässt sich erreichen, dass das kalte Brauchwasser welches mit einer Temperatur von im Winter unter 10°C zufließt, vorgeheizt wird und somit nur noch ein Bruchteil der notwendigen Wärme elektrisch zugeführt werden muss.

Da eine Brauchwasservorwärmung somit nur im Heizungsbetrieb möglich ist, wird bei einer konventionellen Heizungsanlage in der warmen Jahreszeit das Wasser nicht vorgewärmt. In dieser strömt jedoch das kalte Wasser mit einer höheren Temperatur ein. Im Fall des Vorhandenseins einer Solaranlage kann Solarwärme über den Heizungskreislauf übertragen werden und steht somit zur Vorwärmung des Brauchwassers zur Verfügung.

Vorteilhafte Ausgestaltungen ergeben sich gemäß den Merkmalen der abhängigen Ansprüche.

So wird der Wärmetauscher parallel zu mindestens einem Heizkörper des Heizungskreislaufs angeordnet. Befindet sich in der Verbindung des Wärmetauschers mit dem Heizungskreislauf ein Absperrventil, so kann die Durchströmung des Wärmetauschers verhindert werden. Dies ist vor allem dann der Fall, wenn kein Brauchwasser gezapft wird. Alternativ ist es möglich, in der Verbindung zwischen dem Wärmetauscher im Heizungskreislauf ein Dreiwegeventil anzuordnen. Dieses Dreiwegeventil verfügt über einen dritten Anschluss, der mit einer Bypassleitung parallel zum Wärmetauscher verbunden ist. Bei entsprechender Stellung des kontinuierlich arbeitenden Dreiwegeventils kann ein Teil des im Wärmetauscher abgekühlten Heizungswassers über die Bypassleitung zum den Wärmetauscher zufließenden Wasser beigemischt werden, so dass das Temperaturniveau im Wärmetauscher abgesenkt wird.

Damit der Stellantrieb des Absperr- oder Dreiwegeventils bedarfsgerecht gesteuert werden kann, ist es notwendig, dass der Stellantrieb der Ventile mit einer Steuerung verbunden ist. Die Steuerung wiederum ist mit dem Wasserschalter des Durchlauferhitzers verbunden. Der obligatorische Wasserschalter eines Durchlauferhitzers erkennt eine Durchströmung des Durchlauferhitzers, woraufhin die elektrische Heizung bei Bedarf eingeschaltet wird. Dieses Signal kann ebenfalls zur Betätigung der Ventile als auch der optionalen Umwälzpumpe verwendet werden. Diese Pumpe dient dazu, dass bei entsprechender Betätigung des Dreiwegeventils sowohl der Bypasskanal aus auch die Durchströmung des Wärmetauschers variabel eingestellt werden kann.

Ist im Heizungskreislauf oder in der Verbindung des Wärmetauschers mit dem Heizungskreislauf ein Temperatursensor angeordnet und ist dieser Temperatursensor wiederum mit der Steuerung verbunden, so kann bedarfsgerecht eine Durchströmung des Wärmetauschers erreicht werden. Im Sommer, wenn der Heizungskreislauf kalt ist, ist somit auch die Temperatur des Temperatursensors niedrig. Das Absperrventil bleibt entsprechend geschlossen bzw. das Dreiwegeventil ist derart geschaltet, dass der Wärmetauscher nicht durchströmt wird.

Alternativ kann der Wärmetauscher auch seriell in dem Heizungskreislauf angeordnet sein.

Die Erfindung wird nun anhand der Figuren detailliert erläutert.

### Hierbei zeigen

Figur 1 ein Gebäude mit zwei erfindungsgemäßen Brauchwasservorwärmeinrichtungen und
Figur 2 ein weiteres Ausführungsbeispiel der erfindungsgemäßen Brauchwasservorwärmeinrichtung.

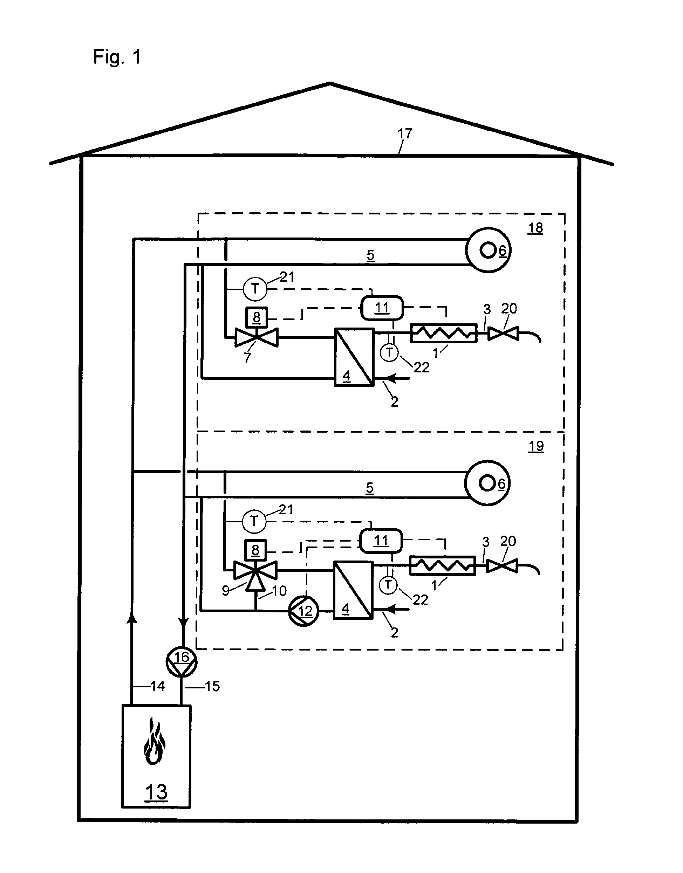

Figur 1 zeigt ein Haus 17 mit zwei Wohneinheiten 18, 19. Eine zentrale erdgasbetriebene Heizungsanlage 13 ist über eine Vorlaufleitung 14 und eine Rücklaufleitung 15, in der sich eine Umwälzpumpe 16 befindet, mit zwei Heizungskreisläufen 5 in der ersten Wohneinheit 18 und einer zweiten Wohneinheit 19 verbunden. Beide Heizungskreisläufe 5 sind jeweils mit einem Heizkörper 6 verbunden.

In der ersten Wohneinheit 18 ist parallel zu dem Heizkörper 6 des Heizungskreislaufs 5 ein Wärmetauscher 4 angeordnet. Auf der einen Seite des Wärmetauschers 4 ist der Wärmetauscher 4 einerseits mit der Rücklaufleitung 15 verbunden, andererseits ist der Wärmetauscher 4 über eine Verbindung mit der Vorlaufleitung 14 verbunden. In dieser Verbindung befindet sich ein Absperrventil 7 mit Stellantrieb 8 sowie ein ersterr Temperatursensor 21. Auf der Sekundärseite des Wärmetauschers 4 befindet sich einerseits eine Frischwasserzulaufleitung 2, andererseits ist mit dem Wärmetauscher 4 ein elektrischer Durchlauferhitzer 1 mit Brauchwasserleitung 3 und Zapfstelle 20 verbunden. Eine Steuerung 11 ist mit dem ersten Temperatursensor 21, dem Stellantrieb 8 sowie dem Durchlauferhitzer 1 verbunden. Zwischen dem Wärmetauscher 4 und dem elektrischen Durchlauferhitzer 1 ist ein weiterer, zweiter Temperatursensor 22 angeordnet, der ebenfalls mit der Steuerung 11 verbunden ist.

Im Winterbetrieb ist der Heizungskreislauf 5 warm. Wird an der Zapfstelle 20 Brauchwasser gezapft, so durchfließt das kalte Brauchwasser von der Frischwasserzulaufleitung 2 durch den Wärmetauscher 4 letztendlich den elektrischen Durchlauferhitzer 1, um durch die Brauchwasserleitung 3 zur Zapfstelle zu gelangen. Hierbei stellt der nicht weiter dargestellte Wasserschalter des Durchlauferhitzers 1 fest, dass eine Brauchwasserzapfung stattfindet. Über den Temperatursensoren 21 und 22, die an die Steuerung 11 angeschlossen sind, wird ermittelt, ob eine Vorerwärmung mit Hilfe des Heizungswassers möglich ist, ob diese gegebenenfalls ausreichend ist, das Brauchwasser im Durchlauferhitzer 1 nacherhitzt werden muss oder ob die Aufheizung im Wärmetauscher 4 gar reduziert werden muss. Der elektrische Heizkörper des elektrischen Durchlauferhitzers 1 erhitzt das Wasser bei Bedarf, sofern das Brauchwasser nicht bereits im Wärmetauscher 4 ausreichend erhitzt wird. Zugleich gibt der elektrische Durchlauferhitzer 1 das Signal des Wasserschalters an die Steuerung 11. Die Steuerung 11 erhält ferner das Signal des ersten Temperatursensors 21 und des zweiten Temperatursensors 22. Da der Heizkreislauf 5 warm ist, ist die Temperatur des Temperatursensors 21 entsprechend hoch. Deshalb verarbeitet die Steuerung 11 das Signal des Temperatursensors 21 dahingehend, dass der Stellantrieb 8 des Absperrventils 7 letztgenanntes öffnet. Warmes Wasser aus der Vorlaufleitung 14 des Heizungskreislaufs 5 durchströmt den Wärmetauscher 4 und gibt dort thermische Energie auf das Brauchwasser, welches durch die Frischwasserzulaufleitung 2 zum elektrischen Durchlauferhitzer 1 strömt, ab. Als Konsequenz dessen benötigt der elektrische Durchlauferhitzer 1 weniger elektrische Energie, um das Brauchwasser auf die Solltemperatur zu erhitzen. Falls durch die Vorwärmung im Wärmetauscher 4 das Brauchwasser bereits auf Solltemperatur des Durchlauferhitzers erwärmt wird, wird keine elektrische Energie mehr für den elektrischen Durchlauferhitzer benötigt. Hierzu dient der zweite Temperatursensor 22. Die Solltemperatur kann entweder an der Steuerung 11 eingestellt werden oder wird ihr vom Sollwertgeber des Durchlauferhitzers 1 vorgegeben.

Die erfindungsgemäße Vorrichtung in der zweiten Wohneinheit 19 unterscheidet sich von der Brauchwasservorwärmeinrichtung in Wohneinheit 18 dadurch, dass an Stelle des Absperrventils 7 ein Dreiwegeventil 9 angeordnet ist. Parallel zu dem Wärmetauscher 4 befindet sich eine Bypassleitung 10. Zwischen der Bypassleitung 10 und dem Wärmetauscher 4 ist eine Pumpe 12 angeordnet. Bei Brauchwasserzapfung erkennt der erste Temperatursensor 21, dass der Heizungskreislauf 5 im Winterbetrieb ist. Das Dreiwegeventil 9 wird derart gestellt, dass der Wärmetauscher 4 durchflutet werden kann. Wird mittels Temperatursensor 22 festgestellt, dass die Temperatur des Brauchwassers bereits vor dem elektrischen Durchlauferhitzer 1 höher als die Sollauslauftemperatur des elektrischer Durchlauferhitzer 1 ist, so wird das Dreiwegeventil 9 derart geschaltet, dass ein Teil des im Wärmetauscher 4 abgekühlten Heizungswassers über die Bypassleitung 10 wieder dem Wärmetauscher 4 zugeführt wird. Hierdurch wird das Temperaturniveau im Wärmetauscher 4 abgesenkt, so dass die Temperatur des Brauchwassers zwischen Wärmetauscher 4 und elektrischem Durchlauferhitzer 1 sinkt. Im Idealfall wird das Dreiwegeventil 9 derart eingestellt, dass die die Temperatur des Brauchwassers zwischen Wärmetauscher 4 und elektrischem Durchlauferhitzer 1 der Sollauslauftemperatur des elektrischen Durchlauferhitzers 1 entspricht. Zur Anhebung der mittels des zweiten Temperatursensors 22 gemessenen Temperatur des Brauchwassers zwischen Wärmetauscher 4 und elektrischem Durchlauferhitzer 1 wird das Dreiwegeventil 9 derart betätigt, dass immer weniger Heizungswasser durch die Bypassleitung 10 strömt. Strömt kein Heizungswasser durch die Bypassleitung 10 und erreicht die mittels des zweiten Temperatursensors 22 gemessene Temperatur nicht die Solltemperatur des elektrischen Durchlauferhitzers 1, so wird das Brauchwasser im elektrischen Durchlauferhitzer 1 entsprechend nachgeheizt. Diese Vorgänge werden von der Steuerung 11 überwacht.

Im Sommerbetrieb kann im Wärmetauscher 4 nur bei - nicht dargestelltem - solarem Wärmeeintrag Wärme übertragen werden. Dementsprechend bleibt bei konventionellen Heizungsanlagen in der Wohneinheit 18 bei Brauchwasserzapfung das Absperrventil 7 geschlossen bzw. in der Wohneinheit 19 wird das Dreiwegeventil 9 derart angesteuert, dass ebenfalls keine Durchströmung des Wärmetauschers 4 als auch keine Durchströmung der Bypassleitung 10 erfolgt.

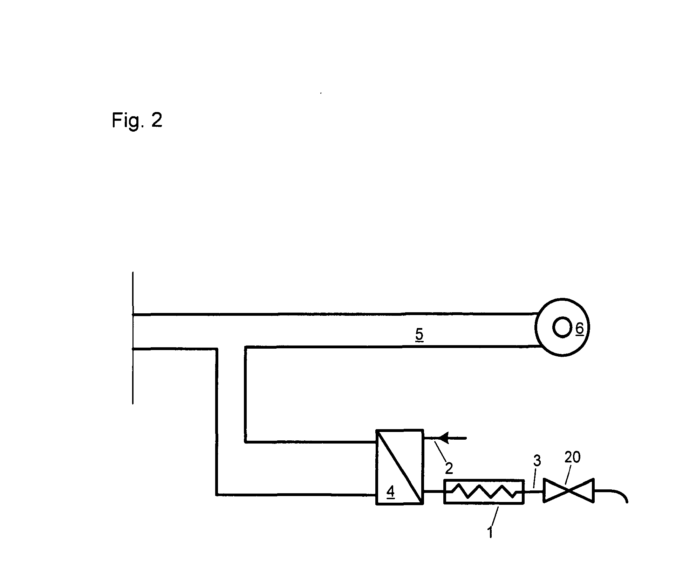

In Figur 2 ist eine alternative Anordnung der Brauchwasservorwärmeinrichtung dargestellt. Der Wärmetauscher 3 ist hierbei seriell im Heizungskreislauf 5 hinter dem Heizkörper 6 angeordnet. Im Sommerbetrieb, wenn der Heizungskreislauf 5 kalt ist, kann der Wärmetauscher 4 zwar durchströmt werden, es findet jedoch keine Wärmeübertragung statt. Im Winterbetrieb, wenn der Heizungskreislauf 5 warm ist, gelangt Wärme von dem Heizungskreislauf 5 über den Wärmetauscher 4 auf die Brauchwasserzufuhr, welche durch die Frischwasserzulaufleitung 2 zuströmt. Die Vorrichtung kommt ohne aufwändige Steuerung des Durchflusses des Wärmetauschers 4 aus. Nachteilig ist jedoch, dass in dem Fall, in dem ein Heizkörperthermostat den Durchlauf des Heizungskreislaufs 5 drosselt, auch dementsprechend nur wenig Wärme über den Wärmetauscher 4 übertragen werden kann. Die erfindungsgemäße Brauchwasservorwärmeinrichtung ist besonders zum Nachrüsten in Bestandsbauten bestens geeignet, da lediglich eine Verbindung mit einem vorhandenen Heizkörper notwendig ist. Da in der Regel auch Räume, in welchen eine Brauchwasserzapfvorrichtung vorhanden ist, über einen Heizkörper verfügen, muss dementsprechend keine aufwändige Verrohrung verlegt werden.

Prinzipiell ist eine erfindungsgemäße Vorrichtung auch für Durchlauferhitzer, die nicht elektrisch betrieben werden, einsetzbar.

## Patentansprüche

1. Brauchwasservorwärmeinrichtung für einen Durchlauferhitzer (1), vorzugsweise elektrischen Durchlauferhitzer (1), mit einer Frischwasserzulaufleitung (2) und einer Warmbrauchwasserleitung (3),
**dadurch gekennzeichnet, dass** in der Frischwasserzulaufleitung (2) stromauf des Durchlauferhitzers (1) ein Wärmetauscher (4), der mit einem Heizungskreislauf (5) verbunden ist, angeordnet ist.

2. Brauchwasservorwärmeinrichtung für einen Durchlauferhitzer (1) nach Anspruch 1,
**dadurch gekennzeichnet, dass** der Wärmetauscher (4) parallel zu mindestens einem Heizkörper (6) des Heizungskreislaufs (5) angeordnet ist.

3. Brauchwasservorwärmeinrichtung für einen Durchlauferhitzer (1) nach Anspruch 2,
**dadurch gekennzeichnet, dass** in der Verbindung des Wärmetauschers (4) mit dem Heizungskreislauf (5) ein Absperrventil (7) mit Stellantrieb (8) angeordnet ist.

4. Brauchwasservorwärmeinrichtung für einen Durchlauferhitzer (1) nach Anspruch 2,
**dadurch gekennzeichnet, dass** in der Verbindung des Wärmetauschers (4) mit dem Heizungskreislauf (5) ein Dreiwegeventil (9) mit Stellantrieb (8) angeordnet ist, wobei das Dreiwegeventil (9) mit seinem dritten Anschluss mit einer Bypassleitung (10), welche parallel zum Wärmetauscher (4) verläuft, verbunden ist.

5. Brauchwasservorwärmeinrichtung für einen Durchlauferhitzer (1) nach Anspruch 4,
**dadurch gekennzeichnet, dass** in der Verbindung des Wärmetauschers (4) mit dem Heizungskreislauf (5) zwischen der Bypassleitung (10) und dem Wärmetauscher (4) eine Pumpe (12) angeordnet ist.

6. Brauchwasservorwärmeinrichtung für einen Durchlauferhitzer (1) nach einem der Ansprüche 3 bis 5, **dadurch gekennzeichnet, dass** der Stellantrieb (8) und / oder die Pumpe (12) mit einer Steuerung (11) verbunden ist, wobei die Steuerung (11) mit dem Wasserschalter des Durchlauferhitzer (1) verbunden ist.

7. Brauchwasservorwärmeinrichtung für einen Durchlauferhitzer (1) nach Anspruch 6,
**dadurch gekennzeichnet, dass** die Steuerung (11) mit einem ersten Temperatursensor (21) im Heizungskreislauf (5) oder in der Verbindung des Wärmetauschers (4) mit dem Heizungskreislauf (5) verbunden ist.

8. Brauchwasservorwärmeinrichtung für einen Durchlauferhitzer (1) nach Anspruch 1,
**dadurch gekennzeichnet, dass** der Wärmetauscher (4) seriell zu mindestens einem Heizkörper (6) des Heizungskreislaufs (5) angeordnet ist.

9. Brauchwasservorwärmeinrichtung für einen Durchlauferhitzer (1) nach einem der Ansprüche 1 bis 8, **dadurch gekennzeichnet, dass** der Durchlauferhitzer (1) und der Wärmetauscher (4) in einer Baueinheit verbunden sind.

10. Brauchwasservorwärmeinrichtung für einen Durchlauferhitzer (1) nach einem der Ansprüche 6 bis 9, **dadurch gekennzeichnet, dass** dem Wärmetauscher (4) und dem elektrischen Durchlauferhitzer (1) ist ein zweiter Temperatursensor (22), der mit der Steuerung (11) verbunden ist, angeordnet ist.
